# EUROPEAN PATENT APPLICATION

(11) **EP 1 528 466 A2**
(43) Date of publication of application: **04.05.2005**
(21) Application number: 04254715.8
(22) Date of filing: 05.08.2004
(51) Int. Cl.: G06F 9/46

(54) **Controlling a presentation of digital content**

(30) Priority: 11.08.2003 US 638868
(71) Applicant: Hewlett-Packard Development Company, L.P., Houston, TX 77070 (US)
(72) Inventor: Wells, Trevor, Vancouver, WA 98684 (US); Chapple, Loren D., Vancouver, WA 98661 (US)
(74) Representative: Jackson, Richard Eric

(57) **Abstract**

The presentation of digital content by a second computing device (21 or 22) is controlled by a first computing device (20) that does not present, access, or store any of the digital content. The first computing device (20) is supplied with a user interface (118) for controlling the presentation of the digital content. A selection made through the user interface (118) is received from the first computing device (20). The presentation of the digital content by the second computing device (21 or 22) is controlled according to the selection.

## Description

### BACKGROUND

The present invention is directed to controlling the presentation of digital content. More particularly, and without limiting the scope of the invention, the invention is directed to remotely controlling the presentation of digital content.

To present charts, graphs, and other visual information to an audience, one used to prepare a series of transparent slides and use an overhead or slide projector to sequentially transmit an image of each slide onto a screen. Today, digital multimedia presentations are the norm. Content previously placed on transparencies can be stored and presented electronically using programming applications such as Microsoft's PowerPoint®. With the use of presentation software such as PowerPoint running on a computer connected to a digital projector, an audience can enjoy a high quality multimedia presentation. In addition to still visual information, each digital slide can include sound, animated graphics, and even video clips.

Rooms in businesses, universities, convention centers, and other presentation sites are often equipped with the hardware and programming needed to present digital multimedia slide shows. A presenter need only supply the digital content. Typically, digital content for a presentation is created or assembled away from the presentation site. To transport digital content to the presentation site, a presenter often saves the content on a computer readable medium such as a compact disc or the hard drive of a portable computer. The presenter must be careful to save the content in a format that is compatible with the programming available at the presentation site. For example, such a presentation site may only be equipped to show a PowerPoint presentation. Unfortunately, a presenter often is unaware of the format limitations of a presentation site.

Any time electronic data such as a digital slide show is transferred to a storage medium such as a compact disc or portable computer, the risk of data loss increases. The transfer to the medium may be incomplete or faulty. When traveling to the presentations site, the medium storing the slide show may itself be lost or damaged. Problems can also arise even if the digital content is safely transported to a presentation site. Between the time the digital content is readied for transport and ultimately presented, unexpected events may cause some or all of the slide show's content to become outdated. In many cases the presenter may not have the time or ability to update the content.

Software such as PowerPoint allows a presenter to manually control or navigate through the digital content. Using a device such as a mouse connected to a computer running the software, the presenter can instruct the software to switch from one digital slide to another. However, a presenter often desires to interact and move around amongst the audience. When using a connected device to navigate through a digital slide show, the presenter cannot move freely and is limited to a range of motion defined by the cord connecting the control device to the computer.

Software such as Microsoft's NetMeeting® allows the user of a controlling computer to remotely direct a program such as PowerPoint or other presentation software running on controlled computer. NetMeeting provides a reflective interface. In other words, NetMeeting attempts to display on the controlling computer a real-time reflection of what is being displayed by the controlled computer. This reflective interface is sometimes referred to as a remote desktop. In short, users of the controlling and controlled computers see the same display. The user of the controlling computer sees a real-time reflection of what is being displayed by the controlled computer.

With NetMeeting a user of a controlling computer can remotely direct the presentation of digital content by a second computer. However, NetMeeting causes the digital content to be presented by both computers. When generating a remote desktop, NetMeeting streams the content over a network from the controlled computer to the controlling computer. This can cause problems in at least two situations. First, the controlling computer may be a web enabled PDA (Personal Digital Assistant) or cellular telephone or other device with insufficient computing power to present the digital content. Second, the network connection between the two computers may be too slow or unreliable to stream the content from the controlled computer to the controlling computer.

### DESCRIPTION OF THE DRAWINGS

Fig. 1 is a schematic representation of a computer network in which various embodiments of the present invention may be incorporated.

Fig. 2 is a block diagram illustrating the logical program components operating on a presentation device and a presentation control device according to an embodiment of the present invention.

Fig. 3 is a block diagram illustrating the logical program components operating on a content store according to an embodiment of the present invention.

Fig. 4 is a block diagram illustrating the logical program components operating on a local presentation device and a remote presentation device according to an embodiment of the present invention.

Fig. 5 is a flow diagram illustrating steps taken to present digital content according to an embodiment of the present invention.

Figs. 6 and 7 are screen displays showing variations of a presentation interface according to embodiments of the present invention

Fig. 8 is a screen is a display showing a control interface according to an embodiment of the present invention.

### DETAILED DESCRIPTION

*INTRODUCTION:* Various embodiments of the present invention, described below, enable an individual giving a presentation to arrive at a presentation site, remotely acquire the digital content for the presentation, and then remotely control the presentation of the digital content. A presenter may arrive at a presentation site carrying nothing but a web enabled device such as a cellular telephone or PDA. Using that mobile device, the presenter can identify remotely stored digital content to be presented and as well as control the presentation of the digital content.

The digital content is electronically transferred to the presentation site after the presenter arrives eliminating much of the risk of data loss or corruption involved with physically transferring the digital content. Using a mobile device to control the presentation also allows the presenter to remain mobile. Up until it is transferred, the digital content can be continuously updated by anyone with access to the content. Even if the presenter cannot update the content, the digital content remains accessible to others who can, thus, helping to ensure that the content presented is relevant and not outdated.

The following description is broken into sections. The first section is a glossary of terms. In the second section, an environment in which the present invention may be implemented is discussed. The hardware and programming components used in a system embodiment of the present invention are described in the third section. In the fourth section, labeled "Operation" steps taken to practice a method embodiment are explained. In the final section, examples of user interfaces for selecting digital content, selecting presentation sites, and controlling the presentation of digital content are described.

### GLOSSARY:

Program: An organized list of electronic instructions that, when executed, causes a device to behave in a predetermined manner. A program can take many forms. For example, it may be software stored on a computer's disk drive. It may be firmware written onto read-only memory. It may be embodied in hardware such as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, programmable gate arrays (PGA), field programmable gate arrays (FPGA), or other components.

Client - Server: A model of interaction between two programs. For example, a program operating on one network device sends a request to a program operating on another network device and waits for a response. The requesting program is referred to as the "client" while the device on which the client operates is referred to as the "client device." The responding program is referred to as the "server," while the device on which the server operates is referred to as the "server device." The server is responsible for acting on the client request and returning requested information, if any, back to the client. This requested information may be an electronic file such as a word processing document or spread sheet, a web page, or any other electronic data to be displayed or used by the client. In any given network there may be multiple clients and multiple servers. A single device may contain programming allowing it to operate both as a client device and as a server device. Moreover, a client and a server may both operate on the same device.

Web Server: A server that implements HTTP (Hypertext Transport Protocol). A web server can host a web site or a web service. A web site provides a user interface by supplying web pages to a requesting client, in this case a web browser. Web pages can be delivered in a number of formats including, but not limited to, HTML (Hyper-Text Markup Language) and XML (extensible Markup Language). Web pages may be generated on demand using server side scripting technologies including, but not limited to, ASP (Active Server Pages) and JSP (Java Server Pages). A web page is typically accessed through a network address. The network address can take the form of an URL (Uniform Resource Locator), IP (Internet Protocol) address, or any other unique addressing mechanism. A web service provides a programmatic interface which may be exposed using a variety of protocols layered on top of HTTP, for example, SOAP (Simple Object Access Protocol).

Interface: The junction between a user and a computer program providing commands or menus through which a user communicates with the program. The term user represents generally any individual, mechanism, or other programming desiring to communicate with the program. For example, in the client-server model defined above, the server usually generates and delivers to a client an interface for communicating with a program operating on or controlled by the server device. Where the server is a web server, the interface may be a web page. The web page, when displayed by the client device, presents a user with controls for selecting options, issuing commands, and entering text. The controls displayed can take many forms. They may include pushbuttons, radio buttons, text boxes, scroll bars, or pull-down menus accessible using a keyboard and/or a pointing device such as a mouse connected to a client device. In a non-graphical environment, the controls may include command lines allowing the user to enter textual commands. Where the user is another program, an interface is often called a programmatic interface.

Digital Content: Electronic data for a presentation. The digital content for a presentation may be contained in one or more files and may include text, animated and still graphics, audio files and/or motion video clips. A presentation can take many forms - a common form being a slide show. Other forms include audio and motion video presentations.

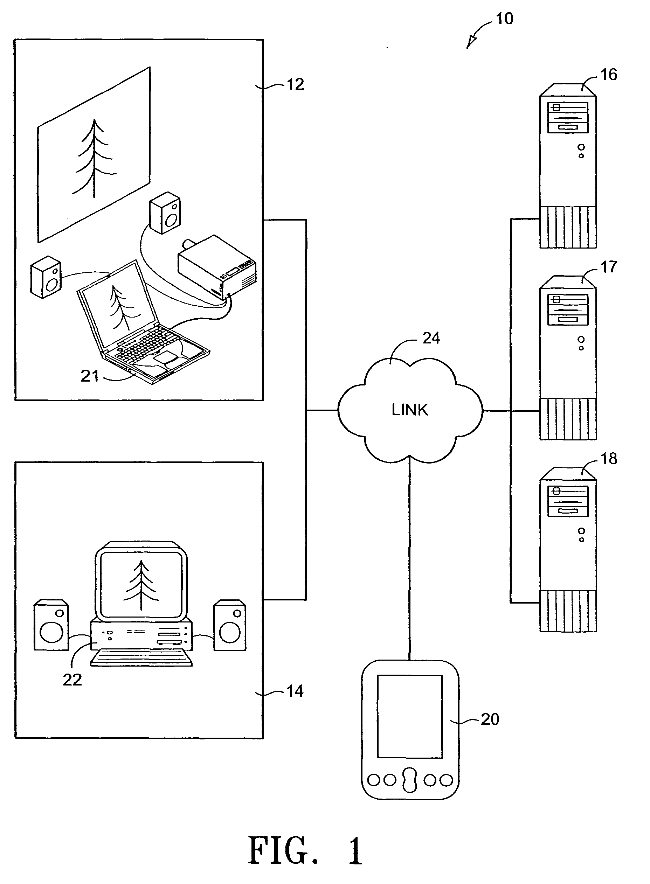

*ENVIRONMENT:* Fig. 1 illustrates a sample network environment 10 in which embodiments of the present invention may be utilized. Environment 10 includes presentation sites 12 and 14, content stores 16-18, and presentation control device 20. It is noted that the number of presentation sites, content servers, and presentation control devices shown in Fig. 1 were chosen arbitrarily.

Each presentation site 12 and 14 represents a unique location at which an audience of one or more individuals may view a presentation. Presentation site 12 includes presentation device 21, and presentation site 14 includes presentation device 22. A presentation device is hardware that can be utilized to present digital content. A presentation device may itself include the hardware for presenting audio and video content or it may include hardware for connecting to and controlling other devices for doing the same. For example, in Fig. 1 presentation device 21 is a computer that presents visual images on a screen using a projector and presents audio using speakers. While not shown, the functions of presentation device 21 could be integrated directly into the projector. In Fig. 1, presentation device 22 is a computer that presents visual images on a monitor. While Fig. 1 shows two presentation sites 12 and 14 and two presentation devices 21 and 22, environment 10 may include any number of presentation sites and any number of presentation devices.

Content stores 16-18 represent generally any hardware and programming capable of storing and serving digital content. Presentation control device 20 represents any computing device capable of displaying an interface that enables a user to interact with programming at presentation site 12 and/or 14 in order to control the presentation of digital content. Presentation control device 20 is, in this embodiment, a web enabled mobile computing device such as a cellular telephone or PDA (Personal Digital Assistant). Where a particular presentation is a digital slide show, the PDA may include a web browser capable of displaying a web page including controls that when selected by a user send instructions to change the displayed slide. Where a given presentation includes showing a motion video or playing audio files, the web page may instead include controls for volume adjustment, pausing, stopping, fast forwarding, and rewinding.

Link 24 interconnects presentations sites 12 and 14, content stores 16-20 and presentation control device 20. Link 24 represents generally a cable, wireless, or remote connection via a telecommunication link, an infrared link, a radio frequency link, or any other connector or system that provides electronic communication between devices 12 and 14. Link 24 may represent in whole or in part an intranet, the Internet, or a combination of both.

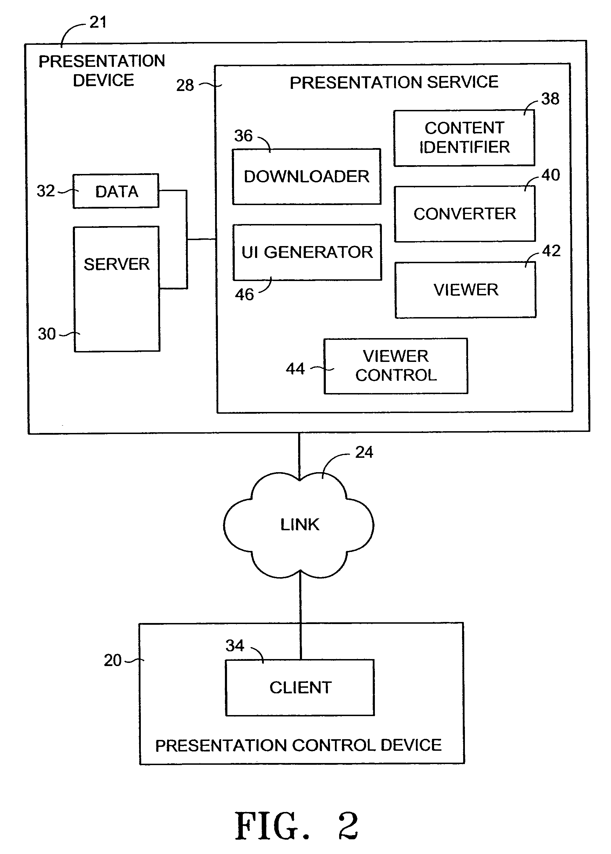

*COMPONENTS:* The logical components of a first embodiment of the invention will now be described with reference to the block diagram of Fig. 2. In this embodiment, digital content is presented by a single presentation device 21. Presentation device 21 may use or include a projector, audio amplifier, speakers, and/or a monitor. Fig. 2 illustrates presentation device 21 running presentation service 28. Presentation service 28 includes downloader 36, content identifier 38, converter 40, viewer control 44, and viewer 42. Presentation device 21 may be a computer, as illustrated in Fig. 1. Presentation device 21 may be a stand alone single purpose device, or, for example, it may be one or more components integrated into a projector or other device.

Downloader 36 represents generally any programming capable of transferring digital content over link 24. Content identifier 38 represents any programming capable of identifying the format of digital content. For example, digital content may be a Microsoft PowerPoint file, a PDF (Portable Document Format) file or an Adobe PostScript® file. Converter 40 represents any programming capable of converting digital content from one format to another. For example, converter 40 may be capable of converting a PowerPoint file to PDF, PostScript, or HTML (Hypertext Markup Language) format. Such programming is well known to those skilled in the art.

Viewer 42 represents any programming capable of interpreting and presenting digital content in one or more formats. Viewer 42 can be an application such as Microsoft PowerPoint or Adobe's Acrobat@. However, viewer 42 need not include the full functionality of such applications. Microsoft PowerPoint and Adobe Acrobat each include programming for assembling and/or controlling the presentation of digital content where viewer 42 need only include programming for presenting digital content.

As an example, viewer 42 may include programming capable of presenting slide shows in one or more formats. For slideshows, format examples include Microsoft PowerPoint, PDF (Portable Document Format), PostScript, web pages, and any other format that can define the layout and content of individual pages or slides. Each page or slide can contain any combination of text, still and animated graphics, audio, and motion video. Where viewer 42 can only present content in, for example, PostScript format, and transferred content is in PDF format, converter 40 is responsible for converting the transferred content to PostScript.

Viewer 42 may also include programming for playing audio and motion video files in varying formats. Common motion video formats include MPEG (Motion Picture Expert Group) and AVI (Audio Video Interleave). Common audio formats include MP3 (MPEG audio Layer 3) and WAV. Where viewer 42 can only present audio content in, for example, WAV format, and transferred content is in MP3 format, converter 40 is responsible for converting the transferred content to the WAV format.

Viewer control 44 represents any programming capable of directing viewer 42 in the presentation of digital content. For example, where digital content is a slide show, viewer control 44 is responsible for directing viewer 42 to switch its display from one slide to another. Where digital content is audio or motion video, viewer control 44 may be responsible for directing viewer 42 to pause, rewind, fast forward, and play. Viewer control 44 is also responsible for communicating with viewer 42 to determine the current status of a presentation such as whether the presentation is running or has stopped as well as information regarding the content currently being presented.

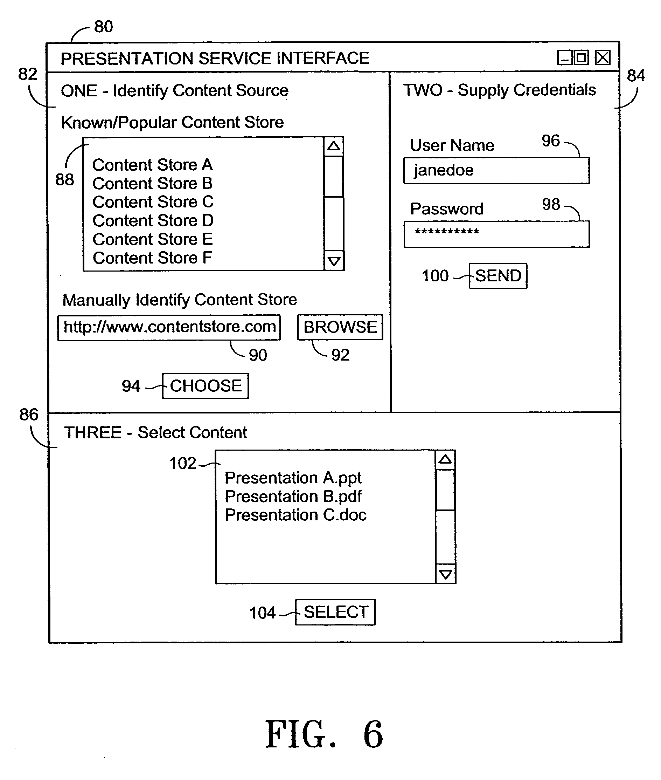

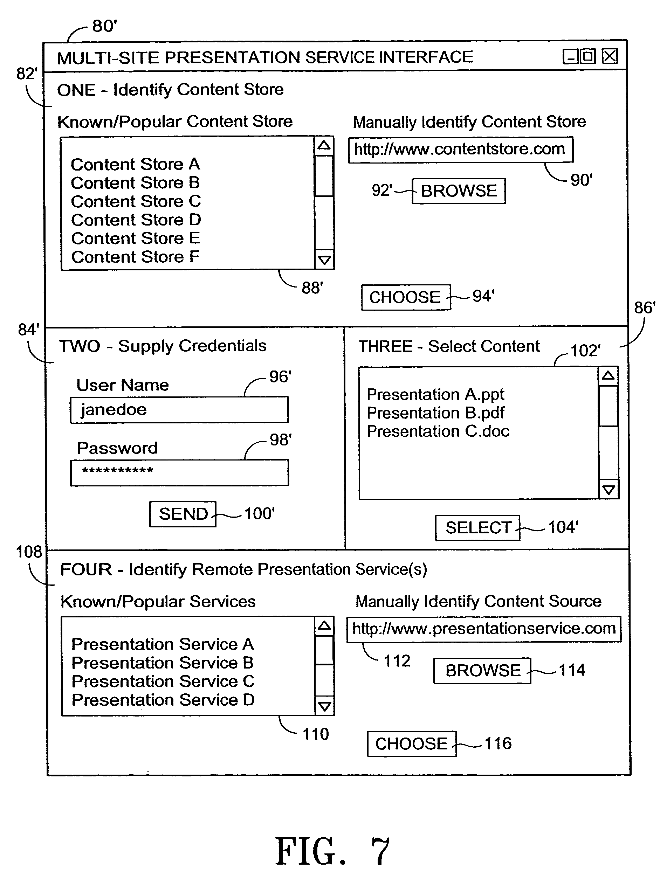

UI generator 46 represents any programming capable of creating interfaces enabling a user of presentation control device 20 to interact with downloader 36 and viewer control 44. An interface generated to interact with downloader 36 is referred to as a presentation interface and may include controls for identifying and searching content stores 16-18 (shown in Fig. 1) for digital content to transfer. Examples of such an interface are discussed below with reference to Figs. 6 and 7. An interface generated to interact with viewer control 44 is referred to as a control interface. A control interface is a command based interface designed to be displayed by presentation control device 20 and includes one or more controls that, when selected by a user, guide the manner in which viewer control 44 directs viewer 42. As used in this document, the phrase "command based control interface" means a control interface that is used to issue commands and is not a reflective interface. A reflective interface is a user interface that either provides or attempts to provide a reflection of another user interface. For example, NetMeeting provides a reflective interface. A command based interface does not serve as a substitute for viewer 42 and it is not used to present digital content. Instead, it allows a user to control viewer 42 in the presentation of digital content. The results of commands entered trough a control interface are reflected in the actions taken by viewer 42.

Nonetheless, a command based control interface may display a preview image of the content currently being displayed by viewer 42. A preview image is a limited visual representation of digital content being presented. A preview image is not a reflection of the digital content being presented. Displaying a preview image of digital content being presented is not the same as presenting digital content. To avoid consuming valuable computing resources, a preview image provided in the control interface includes limited graphics and does not include audio or motion video. For example, a preview image may be a low resolution screen capture or still image of what is being displayed by viewer 42. Alternatively, the preview image may merely display a name for the current presentation.

An example of a non-command based interface is the reflective interface provided by NetMeeting as it controls a second application such as PowerPoint. The reflective interface may include controls for guiding the presentation of digital content by PowerPoint, but it also is used to display the results of commands entered through the interface. If a user selects a start or play command, the reflective interface displays or attempts to display the presentation in real time.

A control interface is command based so that it remains small and requires minimal memory. This allows a mobile device such as web enabled PDA or cellular telephone having limited memory and processing capabilities to serve as presentation control device 20. The small size also allows a control interface to be implemented using HTTP (Hypertext Transport Protocol) allowing presentation service 28 to more quickly transmit the control interface to presentation control device 20. A control interface may include information regarding the current status of a presentation such as data identifying the current slide being presented, but it does not make use of a presentation control device 20 to present the digital content. If the control interface were to also be used to present the digital content, transmission time would by greatly increased, and the capabilities of a presentation control device such as a PDA would be maximized or perhaps even overwhelmed.

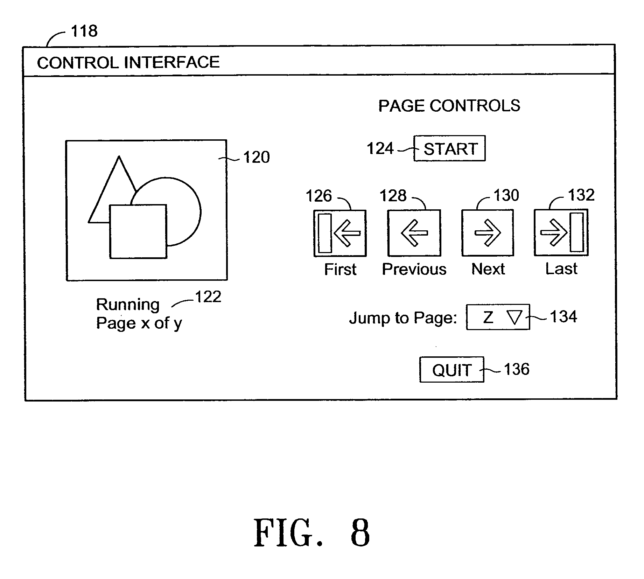

UI generator 46 generates a control interface according the identified format of digital content transferred for a presentation. Using the examples above, where digital content is a slide show, a generated control interface may include controls that, when displayed on presentation control device 20, allow a user to switch a display from one slide to another. An example of such an interface is discussed below with reference to Fig. 8. Where digital content is motion video, a generated interface may include controls that, when displayed on presentation control device 20, allow a user to pause, rewind, fast forward, play, and adjust the volume.

Alternatively, UI generator 46 may generate a control interface by selecting an appropriate but previously generated control interface. Once a control interface is generated, a digital representation of that interface may be stored for future retrieval and use. For example, where digital content is identified as a motion video presentation, UI generator 46 may generate a control interface by retrieving a previously generated control interface designed to control the presentation of motion video.

The number and type of controls included in a control interface for interacting with viewer control 44 depend upon the sophistication of viewer 42 and/or viewer control 44. In the present embodiment, only controls for providing directions that can be acted upon by viewer 42 are included. When presenting a slide show a more sophisticated viewer may be able to act on directions to jump to a particular slide where a less sophisticated viewer may only be able to sequentially scroll through the slides. When presenting audio or motion video, a more sophisticated viewer may be able to act on directions to fast forward and rewind where a less sophisticated viewer may only be able to act on directions to start, pause, and stop.

Presentation device 21 also includes server 30 and data 32. Server 30 is responsible for serving presentation service 28. This includes serving interfaces to presentation control device 20. The interfaces enable a user of presentation control device 20 to interact with presentation service 28. Data 32 represents transferred digital content and any other data used by presentation service 28 and server 30 to perform their respective functions.

Fig. 2 also shows client 34 running on presentation control device 20. Client 34 represents generally any programming that can request and display interfaces for interacting with presentation service 28. According to one embodiment, client 34 is a Web Browser. The interactions between client 34, server 30, and presentation service 28 will be discussed below.

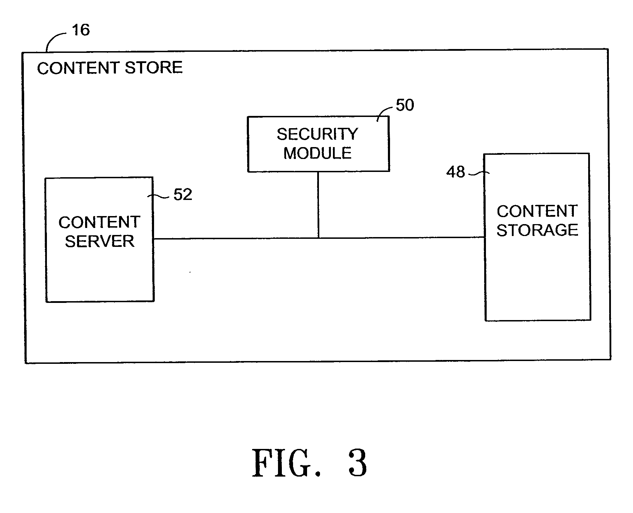

Fig. 3 is a block diagram illustrating the components of a content store - in this example - content store 16. Content store 16 includes content storage 48, security module 50, and content server 52. Content storage 48 represents memory, preferably non-volatile memory, containing digital content for one or more presentations. Security module 50 represents generally any programming capable of limiting requests from downloader 36 (shown in Fig 2) to access content storage 48. This may involve granting only those requests that are accompanied by verifiable credentials such as a valid username and password pair. Content server 52 represents generally any programming capable of serving digital content from content storage 48.

The interaction of each of the components described above will be discussed in a following section entitled "Operation." To summarize with reference to Figs. 1 and 2, a user arriving at presentation site 12 with nothing but presentation control device 20 can direct presentation device 21 to transfer digital content. Presentation device 21 transfers digital content from content store 16 through content server 52 using the appropriate security measures, when necessary. Presentation service 28 running on presentation device 21 identifies the format of the digital content. If needed, the content is converted to a supported format. Presentation service 28 generates a control interface specific to the format of the digital content. The control interface is supplied to and displayed by presentation control device 20. Selections made through the control interface on presentation control device 20 are reported back to presentation service 28. At the direction of presentation service 28, presentation device 21 presents the digital content according to those selections.

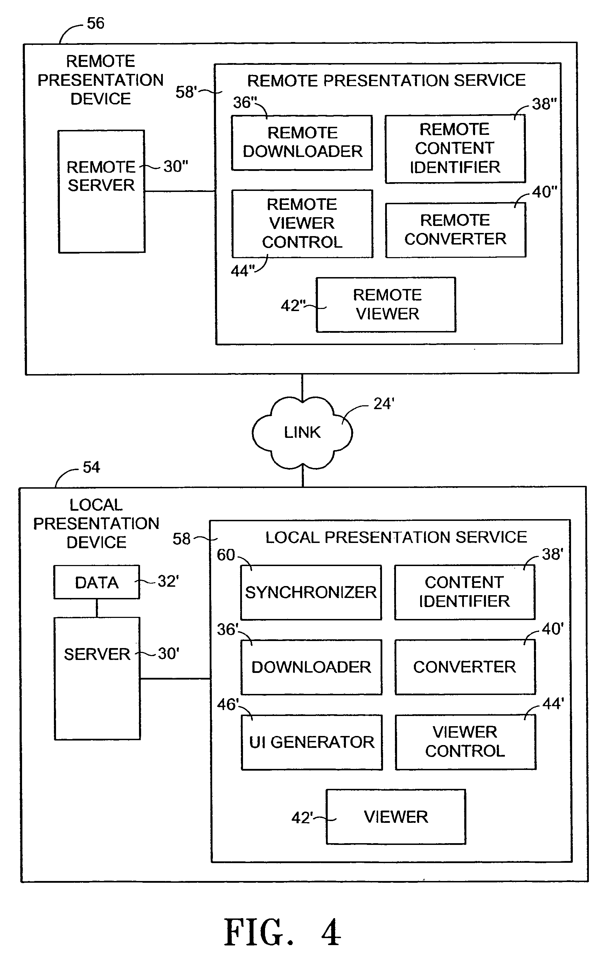

The logical components of a second embodiment of the present invention will now be described with reference to the block diagram of Fig. 4. Implementations of this embodiment will enable digital content to be simultaneously presented at two sites by separate presentation services. As shown, local presentation device 54 running local presentation service 58 is located at one site and remote presentation device 56 running remote presentation service 58' is located at the other site. Devices 54 and 56 are interconnected by link 24. The terms local and remote are used only to indicate that local presentation device 54 is unique from remote presentation device 56 and that local presentation service 58 is unique from remote presentation service 58'. Devices 54 and 56 may be located in the same room or at opposite ends of the globe. They need only be connected by link 24.

When compared to presentation service 28 shown in Fig 2, local presentation service 58 includes an additional component - synchronizer 60 - while remote presentation service 58' may not include a UI generator. Synchronizer 60 represents any programming capable of synchronizing the presentation of digital content by viewer 42' and remote viewer 42". Synchronizer 60 is responsible for directing remote presentation service 58' to transfer the same digital content being transferred by local presentation service 58. In doing so, synchronizer 60 passes information selected through a presentation interface to remote presentation service 58'.

Synchronizer 60 also controls the timing of directions issued by viewer control 44' and remote viewer control 44". For example, where digital content is a slide show, synchronizer 60 makes sure that viewer controls 44' and 44" direct viewers 42' and 42" to switch from one slide to another at substantially the same time. Where digital content is an audio or video media file, synchronizer 60 makes sure that viewer controls 44' and 44", for example, direct viewers 42' and 42" to pause playback at the same time. In other words, synchronizer 60 identifies the status of the presentation by viewer 42. Presentation status includes information such as the current slide being shown, the playback position in an audio or video presentation, and data representing commands entered through a control interface. Using the identified presentation status, synchronizer 60 causes viewer control 44" to keep the presentation of digital content by viewer 42" synchronized with the presentation of the same digital content be viewer 42'. Synchronizer 60 may utilize SOAP (Simple Object Access Protocol) to communicate with remote presentation service 58'.

In this embodiment UI generator 46' is also responsible for creating an interface that enables a user to interact, at least indirectly, with and instruct remote downloader 36" to transfer digital content - the same digital content transferred by downloader 36'. While Fig. 4 shows two presentation devices 54 and 56, additional presentation devices could be added in order to present digital content at other remote sites. The functions of UI generator 46' and synchronizer 60 would then be expanded accordingly.

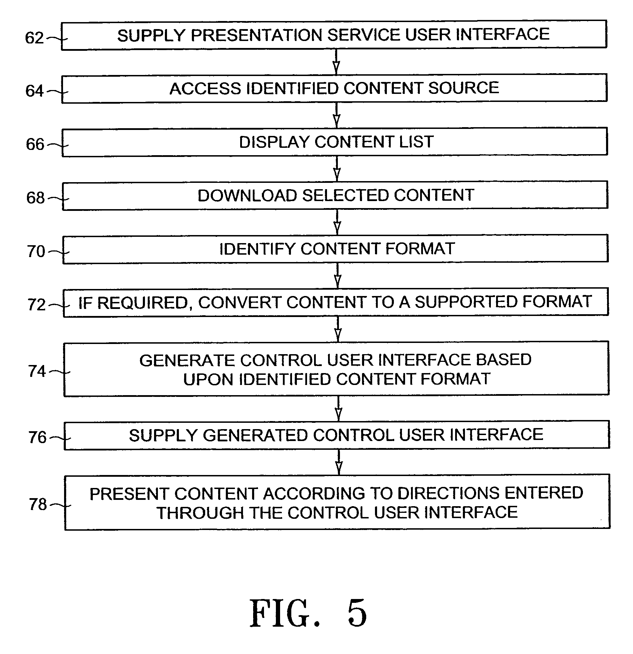

*OPERATION:* Fig. 5 is a flow diagram illustrating steps taken to practice an embodiment of the present invention. The steps shown in Fig. 5 will be discussed with reference to the hardware and programming components illustrated in Figs. 1-4. It is to be understood, however, that other hardware and programming components could be used to carry out the steps shown in Fig. 5.

Initially a user of presentation control device 20 is supplied with a presentation interface (step 62). A presentation interface is an interface having user accessible controls for locating, identifying, and selecting digital content. Where server 30 for presentation service 28 is a web server, requests to access presentation service 28 may be HTTP (Hyper Text Transport Protocol) requests issued by client 34, a web browser, running on presentation control device 20. Upon receiving a request from client 34 to access presentation service 28, server 30 forwards the request to UI generator 46. UI generator 46 creates or otherwise provides server 30 with a presentation interface to return to client 34.

Through the presentation interface, a user of presentation control device 20 manipulates controls to select a content store and to provide any necessary security credentials. A content store selected through the interface is accessed (step 64) and the presentation interface is updated to display a list of one or more digital content files available on the content store (step 66). To perform steps 64 and 66, it is expected that downloader 36, supplying a user's credentials, will request access to a content store identified through the interface. After authenticating the credentials the identified content store will return a list of digital content available to the user. Downloader 36 will provide that list to UI generator 46 which in turn updates the presentation interface to display the list. From the displayed list of content files, a user selects digital content to be presented, and the selected digital content is transferred (step 68).

If digital content is to be presented at a second remote presentation site, the presentation interface supplied in step 62 also includes controls for identifying the remote site. In this case, synchronizer 60 communicates with the remote presentation service 58' running on remote presentation device 56 at an identified remote presentation site. Synchronizer 60 instructs remote presentation service 58' to transfer digital content identified through the presentation interface.

The format of the digital content is automatically identified (step 70), and the digital content is automatically converted, if necessary, to a supported format (step 72). For example, the transferred digital content may be automatically reformatted for PowerPoint. Viewer 42 may only be capable of presenting digital content in PDF format. In step 66, content identifier 38 automatically identifies that the transferred content is in PowerPoint format and converter 40 automatically converts the digital content to PDF format. In other implementations, viewer 42 may only be capable of playing audio and motion video in specified formats - MP3 audio and MPEG video formats for example. Converter 40 may then automatically convert audio content to the MP3 format and motion video content to the MPEG format. Where the digital content is also being presented by remote presentation service 58', the digital content is converted, if necessary, to a format supported by remote viewer 42'.

A command based control interface is generated based upon the display format of the digital content (step 74). The display format may be the original format of the digital content identified in step 70 or the converted/supported format of step 72. As described previously, a control interface includes user accessible controls that, when selected, allow a user to control the presentation of digital content according to the capabilities of viewer 42 and viewer control 44. For example, content identifier 38 may determine that transferred digital content is a digital slide show in PowerPoint format. UI generator 46 then generates a control interface having controls that, when selected by a user, send instructions to viewer control 44. Such instructions may include directions to switch to the next slide or to the previous slide. Where viewer 42 and viewer control 44 are more sophisticated, the instructions may also include directions to jump to a particular slide. Where digital content is identified as a motion video in step 68, UI generator 46 may instead generate a control interface having controls for playing, pausing, fast forwarding, and rewinding. Ultimately, viewer control 44 guides viewer 42 according to instructions entered through a control interface.

A user is then automatically supplied with the control interface generated in step 74 (step 76). To do so, UI generator 46 directs server 30 to send the control interface to client 34 running on presentation control device 20. As noted above, it is expected that server 30 will be a web server and thus client 34 will be a web browser. The control interface may then be in the form of a device independent web page.

Finally, the transferred digital content is presented according to directions entered through the control interface (step 78). Where the digital content is also being presented by remote presentation service 58', synchronizer 60 communicates with remote presentation service 58' to coordinate the actions of remote viewer control 44' with those of viewer control 44. For example, when a user through a control interface, provides an instruction to pause a presentation, synchronizer 60 makes sure that viewer control 44 and remote viewer control 44' execute the instruction so as to pause the presentation at the same point in the presentation. When the user provides an instruction to restart the presentation, synchronizer 60 is responsible for ensuring that viewer control 44 and remote viewer control 44' also restart the presentation from the same point.

*EXAMPLES:* Figs. 6-8 are exemplary screen displays of user interfaces for selecting digital content to present and for controlling the presentation of the digital content. Fig. 6 illustrates presentation interface 80 used to select digital content to be presented at one site. Interface 80 includes three frames 82-86. Frame 82 includes controls 88-94 for selecting a content store. Control 88 contains a list of known and perhaps popular content stores from which a user might select. Controls 90 and 92 allow a user to manually identify a content store. Control 94 is a command button that allows a user to choose a content store selected using control 88 or controls 90 and 92.

Second frame 84 contains controls for supplying credentials for accessing a content store selected through first frame 82. Here, second frame 84 includes controls 96-100 for providing a user name and password pair. Third frame 86 includes controls 102 and 104 for selecting digital content available on the content store identified in first frame 82 and using the credentials supplied through second frame 84. Control 102 is a list of the digital content available.

It is noted that until a content store is identified and credentials are supplied, the available digital content is not known. Consequently, controls in third frame 86 may not be displayed initially. Once a user selects a content sore and provides credentials, downloader 36 submits the credentials to the identified content store. Based upon the credentials, the identified content store returns to downloader 36 a list of available digital content. Downloader 36 then instructs UI generator 46 to update interface 80 to include the returned list.

Fig. 7 illustrates multi-site presentation interface 80' - used to select digital content to be presented at two or more sites. Interface 80' includes four frames. Frames 82'-86' serve the same purpose as frames 82-86 of interface 80 of Fig. 6. Fourth frame 108 includes controls 110-116 for identifying one or more remote presentation services. Control 110 is a list of known and perhaps popular remote presentation services. Controls 112 and 114 allow a user to manually identify a remote presentation service using a URL (Uniform Resource Locator) or other network address. Control 116 is a command button for choosing an identified remote presentation service or services.

Fig. 8 illustrates control interface 118 - used to control the presentation of digital content selected using interface 80 (Fig. 6) or interface 80' (Fig. 7). Control interface 118 includes preview image 120 and status information 122. Preview image 120 is a low resolution visual rendering of the current state of the digital content being presented. Status information 122 is a textual representation of the current state of the digital content being presented. For example, where the digital content being presented is a slide show, preview image 120 may be a low resolution rendering of the slide currently being presented. Status information 122 then provides data representing the relationship between the slide currently being presented and the other slides of the presentation. To keep preview image 120 and status information current, UI generator 46 periodically polls viewer 42 or viewer control 44 for an updated image and status. UI generator 46 then refreshes control interface 118 with the updates.

Control interface 118 also includes controls 124-136 for controlling the presentation of digital content. In this example controls 124-136 are for controlling the presentation of a slide show. As described above, control interface is generated according to the identified format of the digital content to be presented. Where, the digital content being displayed is of another format, audio or motion video for example, control interface 118 would include controls more suitable for controlling the playback of an audio or video file.

*CONCLUSION:* The diagrams of Figs. 2-4 show the architecture, functionality, and operation of various embodiments of the present invention. If embodied in software or other programming, each block may represent a module, segment, or portion of code that comprises one or more executable instructions to implement the specified logical function(s). If embodied in hardware, each block may represent a circuit or a number of interconnected circuits to implement the specified logical function(s). While Figs. 2-4 show each block residing on a particular device, the particular location selected for each block has been chosen merely for ease in illustrating a particular example. In other implementations contemplated by the present invention, one or more of the blocks may instead reside on different devices. For example, converter 40 may reside on content store 16 rather than presentation device 21.

Also, embodiments of the present invention can be implemented in any computer-readable medium for use by or in connection with an instruction execution system such as a computer/processor based system or other system that can fetch or obtain the logic from the computer-readable medium and execute the instructions contained therein. A "computer-readable medium" can be any medium that can contain, store, maintain or transmit programs and data for use by or in connection with the instruction execution system. The computer readable medium can comprise any one of many physical media such as, for example, electronic, magnetic, optical, electromagnetic, infrared, or semiconductor media. More specific examples of a suitable computer-readable medium would include, but are not limited to, a portable magnetic computer diskette such as floppy diskettes or hard drives, a random access memory (RAM), a read-only memory (ROM), an erasable programmable read-only memory, or a portable compact disc.

Although the flow chart of Fig. 5 shows a specific order of execution, the order of execution may differ from that which is depicted. For example, the order of execution of two or more blocks may be scrambled relative to the order shown. Also, two or more blocks shown in succession may be executed concurrently or with partial concurrence. All such variations are within the scope of the present invention.

The exemplary user interface screen displays shown in Figs. 6-8 are just that - exemplary displays of user interfaces. Many other configurations for providing user interfaces are possible. The displays of Figs 6-8 are intended only to provide a context for describing one implementation of the present invention.

The present invention has been shown and described with reference to the foregoing exemplary embodiments. It is to be understood, however, that other forms, details, and embodiments may be made without departing from the spirit and scope of the invention which is defined in the following claims.

## Claims

1. A method, comprising:
supplying a user interface (118) for controlling a presentation of digital content to a first computing device (20) that does not present, access, or store the digital content;
receiving, from the first computing device (20), a selection made through the user interface (118); and
controlling the presentation of the digital content by a second computing (21 or 22) device according to the selection.

2. The method of Claim 1, further comprising:
the first computing device (20) identifying the digital content and conveying the identification to the second computing device (21 or 22); and
transferring the identified digital content so that it is available to be presented by the second computing device (21 or 22).

3. The method of Claim 1, further comprising the second computing device (21 or 22) generating the user interface (118) and wherein supplying comprises the second computing device (21 or 22) sending the user interface (118) to the first computing device (20).

4. The method of Claim 3, further comprising:
the first computing device (20) displaying the user interface (118); and
the first computing device (20) transferring selections made through the user interface (118) to the second computing device (21 or 22).

5. A method, comprising:
supplying a presentation service interface (80) to a first computing device (20), wherein the first computing device (20) receives and displays the interface (80);
receiving first selections made through the displayed presentation service interface (80);
transferring digital content identified by the first selections so that the digital content it is available to a second computing device (21 or 22);
supplying a command based control interface (118) corresponding to a format of the digital content to the first computing device (20);
receiving second selections made through the control interface (118) on the first computing device (20); and
controlling a presentation of the digital content by the second computing device (21 or 22) according to the second selections.

6. A system for presenting digital content, comprising:
an interface generator (46 or 46') operable to supply a presentation interface (80) and a command based control interface (118) to a first computing device (20), the presentation interface (80) having controls that, when selected by a user, identify digital content, the control interface (118) having controls that, when selected by a user, direct the manner in which digital content is to be presented;
a downloader (36 or 36') operable to transfer digital content identified through the presentation interface (80) on the first computing device (20) so that the digital content is available to be presented by a second computing device (21 or 22); and
a viewer (42 or 42') operable to cause the second computing device (21 or 22) to present digital content according to selections made through the control interface (118) on the first computing device (20).

7. The system of Claim 6, further comprising a converter (40 or 40') operable to automatically convert digital content to a format supported by the viewer (42 or 42').

8. The system of Claim 6, further comprising a content identifier (38 or 38') operable to identify a format of the transferred digital content and wherein the interface generator (46 or 46') is further operable to generate the control interface (118) based upon the identified format of transferred digital content.

9. The system of Claim 8, wherein the interface generator (46 or 46') is further operable to generate a control interface (118) according to capabilities of the viewer (42 or 42').

10. The system of Claim 6, further comprising a synchronizer (60) operable to cause the digital content to be transferred so that it is available to a remote viewer (42") and to synchronize the presentation of the digital content by the remote viewer (42") with the presentation of the digital content by the viewer (42').
